# EUROPÄISCHE PATENTANMELDUNG

(11) **EP 1 547 765 A1**
(43) Veröffentlichungstag der Anmeldung: **29.06.2005**
(21) Anmeldenummer: 04405746.1
(22) Anmeldetag: 01.12.2004
(51) Int. Cl.: B32B 27/32, B32B 27/08

(54) **Mehrschichtiges Laminat mit dekorativer Oberfläche und beidseitig angeordneten Polyethylenschichten**

(30) Priorität: 19.12.2003 EP 03405908
(71) Anmelder: Alcan Technology & Management Ltd., 8212 Neuhausen am Rheinfall (CH)
(72) Erfinder: Pasbrig, Erwin, 78224 Singen (DE); Hummel, Otto, 78224 Singen (DE)

(57) **Zusammenfassung**

Ein für Tubenrümpfe geeignetes Laminat weist eine Gesamtdicke von 150 bis 350 µm mit beidseitig aus Polyethylen bestehenden Laminatoberflächen auf, wobei wenigstens eine Seite des Laminates (10, 110, 210, 310) ein aus Fasern aus Polyethylen hoher Dichte (HDPE) gefertigtes Spinnvlies (12) umfasst. Das Spinnvlies verleiht der Laminatoberfläche einen Satinglanz und ergibt als "Soft-Touch"-Oberfläche eine angenehme Haptik.

## Beschreibung

Die Erfindung betrifft die Verwendung eines Laminates für Tubenrümpfe.

Zur Herstellung von Tuben werden heute unter anderem mehrschichtige Kunststofflaminate verwendet. Tuben mit einer so genannten Barriereschicht weisen zusätzlich eine im Innern der Laminate angeordnete Sperrschicht gegen den Durchtritt von Wasserdampf und Gasen, z.B. eine Aluminiumfolie, auf. Die Deckschichten, welche die Laminatoberflächen bilden, bestehen dabei aus Polyethylen, da bei der Herstellung des Tubenrumpfes aus Laminaten, die durch Extrusionskaschierung oder im Cast-Verfahren gefertigt werden, die Innenseite gegen die Aussenseite gesiegelt wird.

Tuben werden unter anderem zur Verpackung von Kosmetik- und Pharmaprodukten eingesetzt. Bei diesen Produktelinien besteht der Wunsch, den Konsumenten die Hochwertigkeit der Produkte über die Verpackung zu vermitteln.

Der Erfindung liegt die Aufgabe zugrunde, ein zur Herstellung von Tuben geeignetes Laminat bereitzustellen, welches zumindest auf einer Seite mit einem ästhetisch ansprechenden Oberflächeneffekt ausgestattet ist.

Zur erfindungsgemässen Lösung der Aufgabe führt ein Laminat einer Gesamtdicke von 150 bis 350 µm mit beidseitig aus Polyethylen bestehenden Laminatoberflächen, wobei wenigstens eine Seite des Laminates ein aus Fasern aus Polyethylen hoher Dichte (HDPE) gefertigtes Spinnvlies umfasst.

Unter den Begriff "Spinnvlies" fällt hier beispielsweise das unter dem Markennamen Tyvek® von DuPont bekannte Produkt. Das Produkt wird gewonnen durch das Verspinnen von Endloslitzen aus sehr fein verwobenen, ungerichteten Fasern aus 100% Polyethylen hoher Dichte (HDPE), die dann durch die Einwirkung von Wärme und Druck zu einer Folie verschweisst werden.

Das Spinnvlies verleiht der Laminatoberfläche einen Satinglanz und führt zu einer "Soft-Touch"-Oberfläche mit angenehmer Haptik. Das Spinnvlies kann eingefärbt sein und bietet eine gut bedruckbare Oberfläche an.

Grundsätzlich können beide Seiten des Laminates ein Spinnvlies umfassen. Dies dürfte aber aus Kostengründen nur dann sinnvoll sein, wenn beide Seiten des Laminates für den Betrachter sichtbar sind.

Eine der Laminatoberflächen kann beispielsweise ein beidseitig mit Polyethylen beschichteter, aus einer Mischung von Polyethylen und Polypropylen bestehender Compoundfilm, ein LMDPE-, LLDPE- oder LDPE-Film oder ein Film aus geschäumtem Polyethylen sein.

Ein beidseitig mit Polyethylen beschichteter Compoundfilm verleiht dem Laminat eine höhere Steifigkeit, so dass die mit einem Laminat mit reinen Polyethylen-Schichten erzielbare Steifigkeit schon bei geringerer Laminatdicke erreicht wird. Der durch die reduzierte Dicke erniedrigte Materialbedarf führt letztlich zu einem kostengünstigeren Laminat. Der Compoundfilm enthält vorzugsweise mehr als 50 Gew.-% Polypropylen sein. Die auf beiden Seiten des Compoundfilms angeordneten Polyethylenschichten weisen bevorzugt eine Dicke von 10 bis 30 µm auf. Die bevorzugte Dicke des Polypropylen-Compoundfilms liegt bei 20 bis 80 µm.

Mit einem geschäumten Film aus Polyethylen kann ebenfalls Gewicht eingespart und eine weiter verbesserte Steifigkeit des Laminates erreicht werden. Zudem zeigt der geschäumte Film ein besseres Gleitverhalten u. a. gegen Stahl, wodurch die Tubenproduktion sicherer gemacht werden kann.

Im Innern des Laminates kann im Bedarfsfall eine Barriereschicht gegen den Durchtritt von Wasserdampf und Gasen angeordnet sein.

Die Sperrschicht gegen Gase, Dämpfe und Feuchtigkeit, die sog. Barriereschicht, kann eine Metallfolie aus beispielsweise Aluminium sein. Andere geeignete Materialien für Sperrschichten sind beispielsweise Filme aus Kunststoffen, wie Polyvinylidenchlorid (PVDC), Ethylvinylalkohol (EVOH), Polyamid (PA) oder Polyamid-Blends, im Dickenbereich zwischen etwa 3 und 25 µm, oder eine Schicht aus keramischen Materialien, wie beispielsweise aus Silizium- oder Aluminiumoxid bzw. -nitrid, die als dünne Schicht im Bereich von etwa 10 - 500 nm im Vakuum abgeschieden werden. Beispiele weiterer Sperrschichten sind metallische Schichten, z.B. aus Aluminium, die beispielsweise durch Sputtern oder durch Abscheidung aus dem Vakuum in einer Dicke von etwa 10 nm bis etwa 2 µm abgeschieden werden.

Im vorliegenden Fall ist insbesondere eine Aluminiumfolie geeignet, dem Laminat neben den Barriereeigenschaften, welche den Durchtritt von Flüssigkeiten, Gasen, Dämpfen, Wasserdampf, Aromen oder Geruchsstoffen verhindern, zusätzliche mechanische Stabilität zu verleihen.

Zwischen dem Spinnvlies und der Aluminiumfolie ist bevorzugt eine Zwischenschicht aus coextrudiertem PolyethylenNinylacetat (VA) angeordnet.

Zwischen der Aluminiumfolie und einer der die Laminatoberflächen bildenden Polyethylenschichten kann auch eine Zwischenschicht aus einem Ethylencopolymer, insbesondere einem Ethylen-Acrylsäure (E.AA)-Copolymer, angeordnet sein.

Die bevorzugte Dicke der Aluminiumfolie liegt bei 5 bis 40 µm.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: den Aufbau einer ersten Ausführungsform eines Tubenlaminates;
- - Fig. 2: den Aufbau einer zweiten Ausführungsform eines Tubenlaminates;
- - Fig. 3: den Aufbau einer dritten Ausführungsform eines Tubenlaminates;
- - Fig. 4: den Aufbau einer vierten Ausführungsform eines Tubenlaminates.

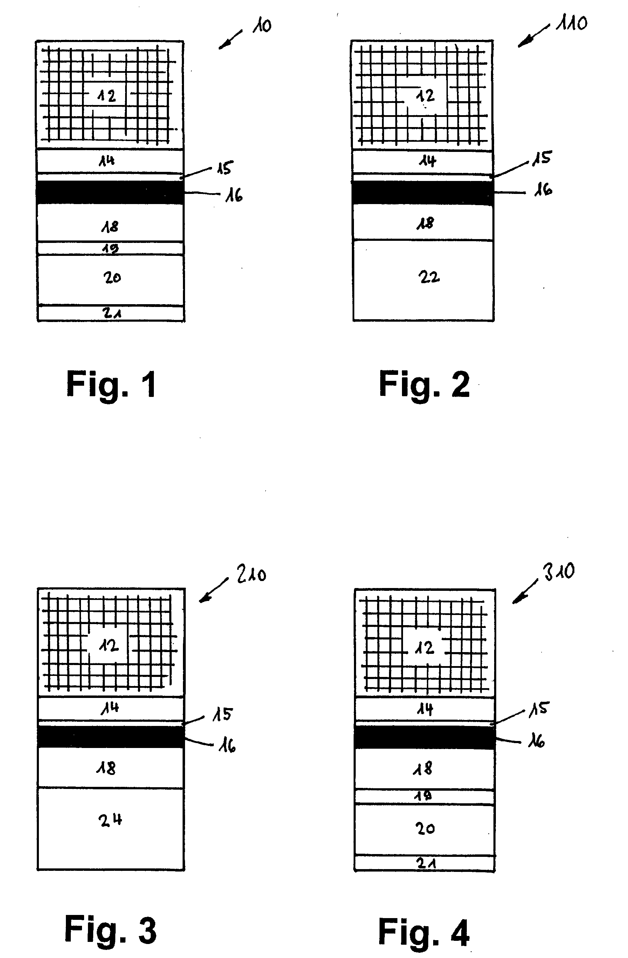

Fig. 1 zeigt den Aufbau eines ersten, eine Gesamtdicke von 245 µm aufweisenden Tubenlaminates 10, das von der Tubenaussenseite zur Tubeninnenseite hin den folgenden Aufbau aufweist:
- 12: HDPE-Spinnvlies, weiss, 160 µm
- 14, 15: coextrudierter PENA-Film, weiss, 17 µm
- 16: Aluminiumfolie, 6,3 µm
- 18: E.AA-Copolymerfilm, 17 µm
- 19: PE-Film, 15 µm
- 20: PE/PP-Compoundfilm, 15 µm
- 21: PE-Film, 15 µm

Das HDPE-Spinnvlies 12 und der PP/PE-Compoundfilm 20 mit den beidseitigen PE-Schichten 19, 21 werden beispielsweise über den coextrudierten PENA-Film 14, 15 bzw. über den E.AA-Copolymerfilm 18 mit der Aluminiumfolie 16 laminiert.

Fig. 2 zeigt den Aufbau eines Tubenlaminates 110 entsprechend dem Tubenlaminat 10 von Fig. 1, wobei jedoch anstelle des PP/PE-Compoundfilms 20 mit den beidseitigen PE-Schichten 19, 21 ein geschäumter PE-Film 22 die Tubeninnenseite bildet. Das Tubenlaminat 110 mit einer Gesamtdicke von 275 µm weist von der Tubenaussenseite zur Tubeninnenseite hin den folgenden Aufbau auf:
- 12: HDPE-Spinnvlies, weiss, 160 µm
- 14, 15: coextrudierter PENA-Film, weiss, 24 µm
- 16: Aluminiumfolie, 6,3 µm
- 18: E.AA-Copolymerfilm, 24 µm
- 22: PE-Film, geschäumt, 60 µm

Fig. 3 zeigt den Aufbau eines Tubenlaminates 210 entsprechend dem Tubenlaminat 110 von Fig. 1, wobei jedoch anstelle des PP/PE-Compoundfilms 20 mit den beidseitigen PE-Schichten 19, 21 ein LMDPE-Film 24 die Tubeninnenseite bildet. Das Tubenlaminat 210 mit einer Gesamtdicke von 275 µm weist von der Tubenaussenseite zur Tubeninnenseite hin den folgenden Aufbau auf:
- 12: HDPE-Spinnvlies, weiss, 160 µm
- 14, 15: coextrudierter PENA-Film, weiss, 20 µm
- 16: Aluminiumfolie, 12 µm
- 18: E.AA-Copolymerfilm, 20 µm
- 24: LMDPE-Film, 60 µm

Fig. 4 zeigt den Aufbau eines Tubenlaminates 310 entsprechend dem Tubenlaminat 110 von Fig. 1. Das Tubenlaminat 310 mit einer Gesamtdicke von 275 µm weist von der Tubenaussenseite zur Tubeninnenseite hin den folgenden Aufbau auf:
- 12: HDPE-Spinnvlies, weiss, 160 µm
- 14, 15: coextrudierter PENA-Film, weiss, 27 µm
- 16: Aluminiumfolie, 12 µm
- 18: E.AA-Copolymerfilm, 27 µm
- 19: PE-Film, 15 µm
- 20: PE/PP-Compoundfilm, 15 µm
- 21: PE-Film, 15 µm

### Beispiel

Anhand mathematischer Modellrechnungen wurden für die drei in der Tabelle angeführten Ausführungen von Tubenlaminaten A, B, und C die Biegesteifigkeit errechnet. Die Ausführungen B und C sind erfindungsgemäss aufgebaute Laminate, Ausführung A ist ein Vergleichsbeispiel. Alle drei Laminate weisen die gleiche Gesamtdicke von 272 µm auf und unterscheiden sich nur im Aufbau des Spinnvlieses.

**Tabelle**

| Ausführung A | Ausführung B | Ausführung C |
|---|---|---|
| LDPE-Spinnvlies, 160 µm | HDPE-Spinnvlies, 160 µm | HDPE-Spinnvlies, 160 µm |
| Coextrudierter PENA-Film, 20 µm | coextrudierter PENA-Film, 20 µm | coextrudierter PENA-Film, 23 µm |
| Aluminiumfolie, 12 µm | Aluminiumfolie, 12 µm | Aluminiumfolie, 6,3 µm |
| E.AA Copolymerfilm, 20 µm | E.AA Copolymerfilm, 20 µm | E.AA Copolymerfilm, 20 µm |
| LMDPE Film, 60 µm | LMDPE Film, 60 µm | LMDPE Film, 60 µm |
| Biegesteifigkeit: 0,55 Nmm | Biegesteifigkeit: 1,30 Nmm | Biegesteifigkeit: 1,22 Nmm |

Die Berechnungen zeigen deutlich den Unterschied in der Biegesteifigkeit bei einer stofflichen Veränderung. Ein Laminat mit einem HDPE-Spinnvlies gemäss den Ausführungen B und C führt zu mehr als einer Verdoppelung der Biegesteifigkeit gegenüber einem Laminat gemäss der Ausführung A mit gleichem Aufbau mit Ausnahme eines LDPE-Spinnvlieses anstelle des HDPE-Spinnvlieses.

Die durch das HDPE bedingte höhere Steifigkeit und stärkere Rückstellkraft des Laminates machen einen aus dem Laminat gefertigten Tubenrumpf beulfester. Diese Eigenschaft wirkt verkaufsfördernd, wenn Tuben ohne Umverpackung angeboten werden. Die Dicke der Aluminiumfolie beeinflusst die Biegesteifigkeit der Laminate bei der hier gewählten Schichtdickenverteilung nur geringfügig und kann deshalb unter Beibehaltung der Barrierewirkung ohne Steifigkeitsverlust des Laminates reduziert werden.

## Patentansprüche

1. Verwendung eines Laminates einer Gesamtdicke von 150 bis 350 µm mit beidseitig aus Polyethylen bestehenden Laminatoberflächen, wobei wenigstens eine Seite des Laminates (10, 110, 210, 310) ein aus Fasern aus Polyethylen hoher Dichte (HDPE) gefertigtes Spinnvlies (12) umfasst, für Tubenrümpfe.

2. Verwendung nach Anspruch 1, **dadurch gekennzeichnet, dass** beide Seiten des Laminates (10, 110, 210, 310) ein Spinnvlies (12) umfassen.

3. Verwendung nach Anspruch 1 oder 2, **dadurch gekennzeichnet, dass** eine der Laminatoberflächen von einem beidseitig mit Polyethylen beschichteten, aus einer Mischung von Polyethylen und Polypropylen bestehenden Compoundfilm (12), einem LMDPE-, LLDPE- oder LDPE-Film oder einem Film aus geschäumtem Polyethylen gebildet ist.

4. Verwendung nach einem der Ansprüche 1 bis 3, **dadurch gekennzeichnet, dass** im Innern des Laminates eine Barriereschicht gegen den Durchtritt von Wasserdampf und Gasen angeordnet ist.

5. Verwendung nach Anspruch 4, **dadurch gekennzeichnet, dass** als Barriereschicht eine Metallfolie, insbesondere eine Aluminiumfolie (16), ein Kunststofffilm aus Polyvinylidenchlorid (PVDC), Ethylvinylalkohol (EVOH), Polyamid (PA) oder Polyamid-Blends, eine Schicht aus keramischen Materialien, insbesondere aus Silizium- oder Aluminiumoxid bzw. -nitrid, die als dünne Schicht aus dem Vakuum abgeschieden wird, oder eine metallische Schicht, insbesondere aus Aluminium, die durch Sputtern oder aus dem Vakuum abgeschieden wird, verwendet wird.

6. Verwendung nach Anspruch 5, **dadurch gekennzeichnet, dass** zwischen dem Spinnvlies (12) und der Aluminiumfolie (16) eine Zwischenschicht aus einem coextrudierten PolyethylenNinylacetat-Laminat angeordnet ist.

7. Verwendung nach Anspruch 5, **dadurch gekennzeichnet, dass** zwischen der Aluminiumfolie (16) und einer der die Laminatoberflächen bildenden Schichten aus Polyethylen eine Zwischenschicht aus einem Polyethylen-Copolymer, insbesondere einem Ethylen/Acrylsäure-Copolymer, angeordnet ist.

8. Verwendung nach einem der Ansprüche 5 bis 7, **dadurch gekennzeichnet, dass** die Aluminiumfolie (16) eine Dicke von 5 bis 40 µm aufweist.
